# EUROPEAN PATENT SPECIFICATION

(11) **EP 1 870 268 B1**
(45) Date of publication and mention of the grant of the patent: **08.05.2013**
(21) Application number: 07252409.3
(22) Date of filing: 14.06.2007
(51) Int. Cl.: B60G 11/27, B60G 15/06, B60G 17/052, B60G 17/048

(54) **Vehicle supension damper with integral height leveling valve**
Fahrzeugaufhängungsdämpfer mit integriertem Niveauregulierungsventil
Amortisseur de suspension de véhicule avec vanne de mise à niveau intégrale

(30) Priority: 21.06.2006 US 471830
(43) Date of publication of application: 26.12.2007
(73) Proprietor: ArvinMeritor Technology, LLC, Troy, MI 48084 (US)
(72) Inventor: Bell, Stephen Howard, Guelph, ON N1C 1C9 (CA); Sendrea, Darryl, Brampton, ON L6T 3B6 (CA)
(74) Representative: Jones, John Bryn

(56) References cited:
- EP-A2- 1 122 459
- EP-A2- 1 484 205

## Description

### BACKGROUND OF THE INVENTION

This invention relates to vehicle suspension dampers and more particularly to vehicle suspension dampers with a height leveling capability.

Pneumatic height leveling valves used in air suspension systems maintain a pre-determined ride height by regulating the pressurized air within an air spring system. Conventional systems utilize an external height leveling valve to control the amount of air in and out of the air spring. Although effective, remote valves require additional packaging space within the vehicle. In addition, an external valve may be adversely affected by dirt and moisture as the valve may be relatively exposed to the environment.

EP1484205 discloses an air spring suspension damper assembly including a first housing and a second housing which telescope relative to each other.

Integral height leveling valves are becoming more widely known, but commonly provide a relatively complex piston and sleeve arrangement which envelops a vast majority of the damper body. A relatively thick piston and sleeve arrangement covers a large portion of the damper which may result in poor heat dissipation. Conventional internal height leveling valves also typically utilize a linear placement of the valve mechanism. Such a linear placement may introduce a significant amount of dead-length within the damper which may prohibit articulations of the damper under certain vehicle geometries.

Accordingly, it is desirable to provide a damper assembly with a compact integral height leveling valve which maximizes heat dissipation, and is cost effective.

### SUMMARY OF THE INVENTION

The present invention provides a height leveling valve for use in a vehicle having an air spring suspension. The suspension is adjusted to a predetermined height such that the vehicle is relatively level. When the vehicle is in a loaded condition, the suspension falls out of the predetermined range and is not level. The height leveling valve brings the vehicle level once again by regulating fluid pressure within the suspension to return the suspension to the predetermined height.

The height leveling valve of the present invention may be incorporated into an air spring shock module or a shock absorber. In either case, a cylinder contains a piston, as generally known in the art. A piston rod extends from the cylinder into a first housing. A second housing surrounds the cylinder. An actuating member such as a cable is connected to the valve. This compact arrangement aids in heat dissipation. The actuating member is attached to a rotating cam, a rotating valve plate or a rotating valve. Preferably, the actuating member winds around a spool that is connected to the cam, rotating valve plate or rotating valve such that changes in the unwound length of the actuating member rotates the cam, rotating valve plate or rotating valve in one direction or the other. In designs where a cam is used, the cam directly activates radial or axially located spring biased inlet and exhaust valves or else a sliding valve plate.

If a sliding valve plate is used it sits adjacent the rotating cam and includes an inlet and an exhaust flow path. A return spring biases the valve plate toward the cam such that rotation of the cam displaces the valve plate to selectively open and close the inlet and exhaust flow paths.

If the actuating member activates a rotating valve then port valves located to a radial dimension about the rotating valve axis contact the rotating valve which contains inlet and exhaust flow paths. The inlet and exhaust flow paths are selectively opened and closed as the rotating valve plate or rotating valve is rotated under the control of the actuating member to align the inlet or exhaust flow paths through the port valves in the first or second housing with the corresponding inlet or exhaust flow path through the rotating valve plate or valve. Using fewer parts reduces the cost of the valve assembly with respect to other integral height leveling valves.

In embodiments, details of the rotating valve plate may include radially spaced, arc-shaped grooves.

Further, features for adding the height leveling valve to the outer surface of a housing are disclosed. In particular, a u-bolt arrangement may mount the height leveling valve housing to a piston housing, or a cylinder housing.

The present invention therefore provides a damper assembly with a compact height leveling valve which maximizes heat dissipation, and is cost effective. The present invention could also be part of an air spring assembly in which no shock absorber is involved or could be used separate from an air spring, air spring shock module or shock absorber as a separate height leveling valve attached between a fixed suspension member and a suspension member that telescopes relative to the fixed member.

### BRIEF DESCRIPTION OF THE DRAWINGS

Figures 1-11 show related prior art.

Other advantages of the present invention will be readily appreciated as the same becomes better understood by reference to the following detailed description when considered in connection with the accompanying drawings wherein
Figure 1A is a side view of a vehicle having an air spring suspension adjusted to a predetermined height;
Figure 1B is a side view of the vehicle of Figure 1A wherein the air spring suspension is not adjusted to the predetermined height;
Figure 2 is a perspective view of a damper not in accordance with the present invention wherein an integral height leveling valve is housed within the upper end of an air spring shock module;
Figure 3A is a perspective view of a damper assembly not in accordance with the present invention at a desired height;

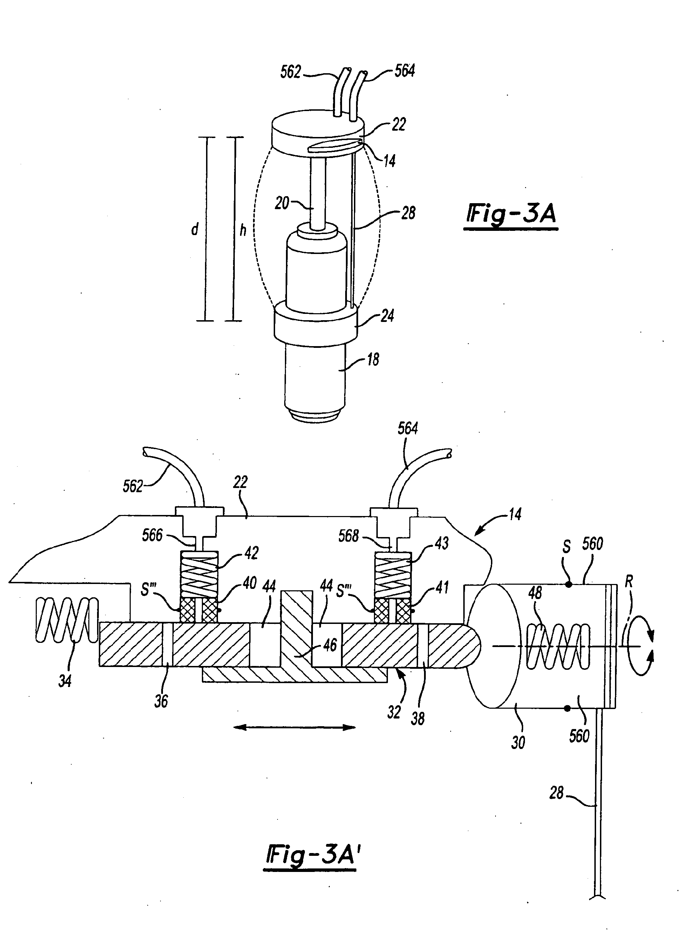

Figure 3A' is an exploded partial sectional view of the integral height leveling valve of Figure 3A;

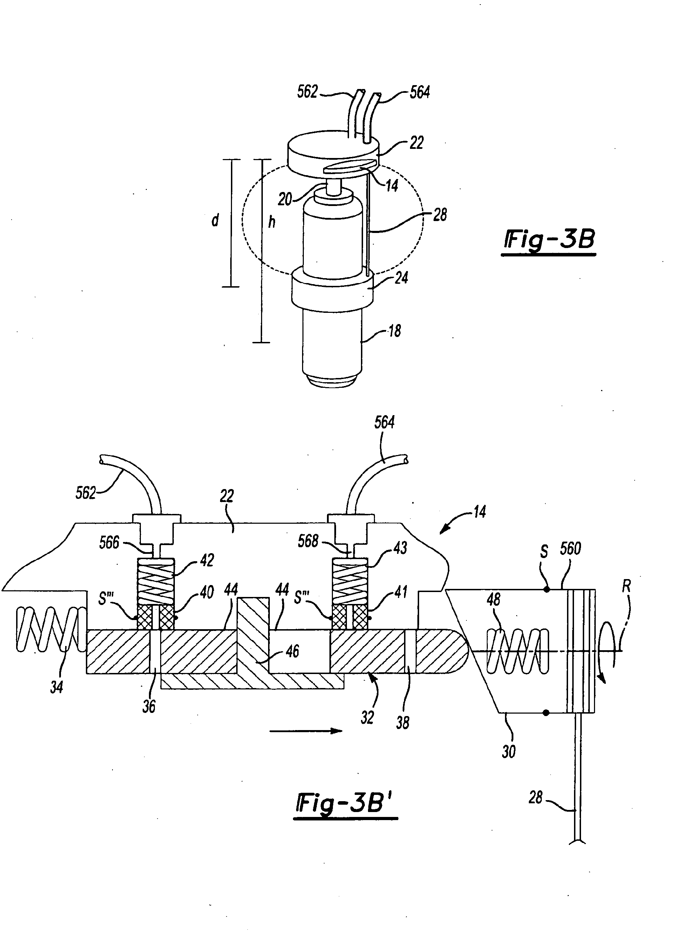

Figure 3B is an perspective view of the damper assembly of figure 3A at a height below a desired height;
Figure 3B' is an exploded partial sectional view of the integral height leveling valve of Figure 3B;

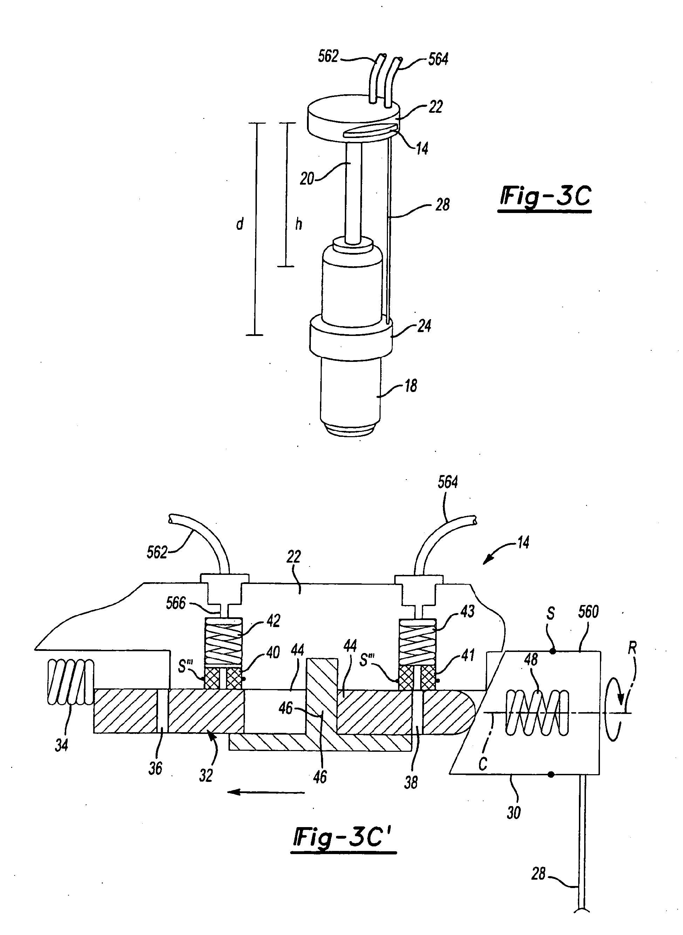

Figure 3C is an perspective view of the damper assembly of figure 3A at a height above a desired height;
Figure 3C' is an exploded partial sectional view of the integral height leveling valve of Figure 3C;

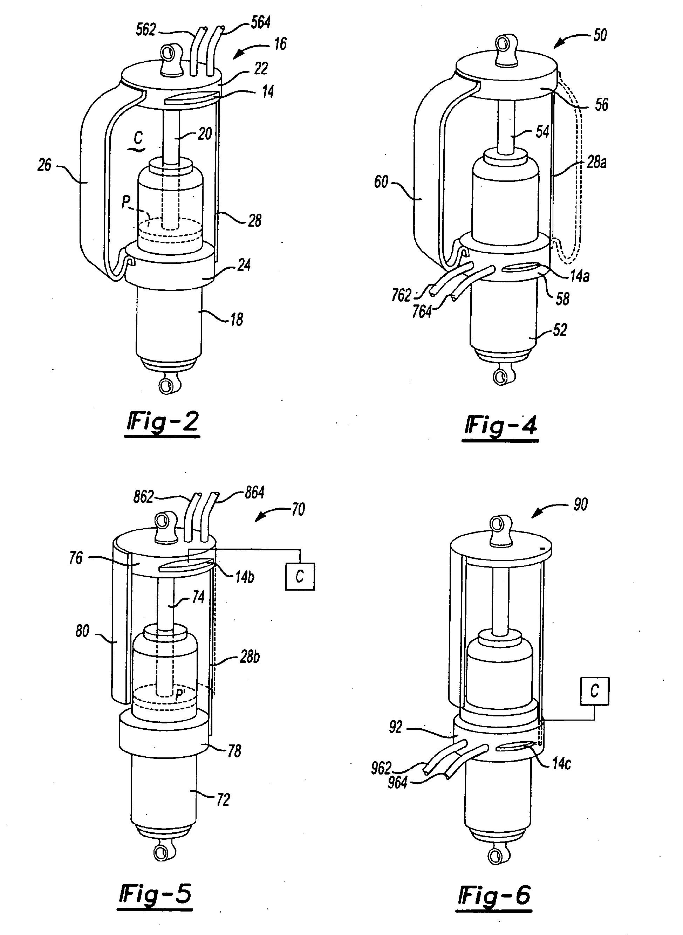

Figure 4 is a perspective view of a damper not in accordance with the present invention wherein the integral height leveling valve of Figure 2 is housed within the lower end of an air spring shock module;
Figure 5 is a perspective view of a damper not in accordance with the present invention, wherein the integral height leveling valve of Figure 2 is housed within the upper housing of a shock absorber;
Figure 6 is a perspective view of a damper not in accordance with the present invention, wherein the integral height leveling valve of Figure 2 is housed within the lower housing of a shock absorber;

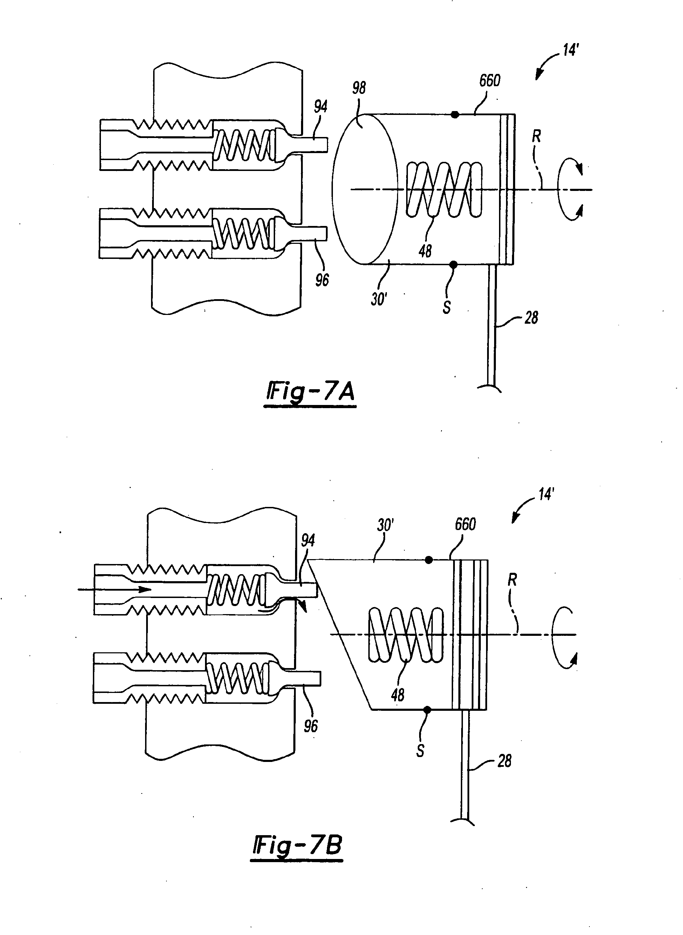

Figure 7A is another integral height leveling valve where inlet and exhaust valves are directly actuated by a cam in an axial direction not according to the present invention;
Figure 7B is the integral height leveling valve of Figure 7A in an inlet open condition;

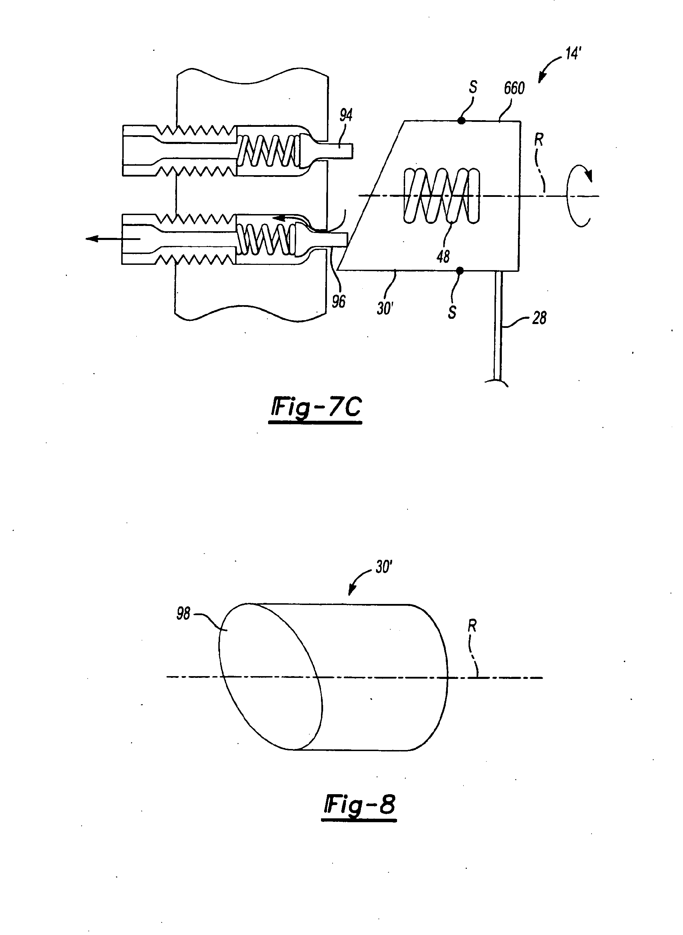

Figure 7C is the integral height leveling valve of Figure 7A in an exhaust open condition;
Figure 8 is a perspective view of the cam member;

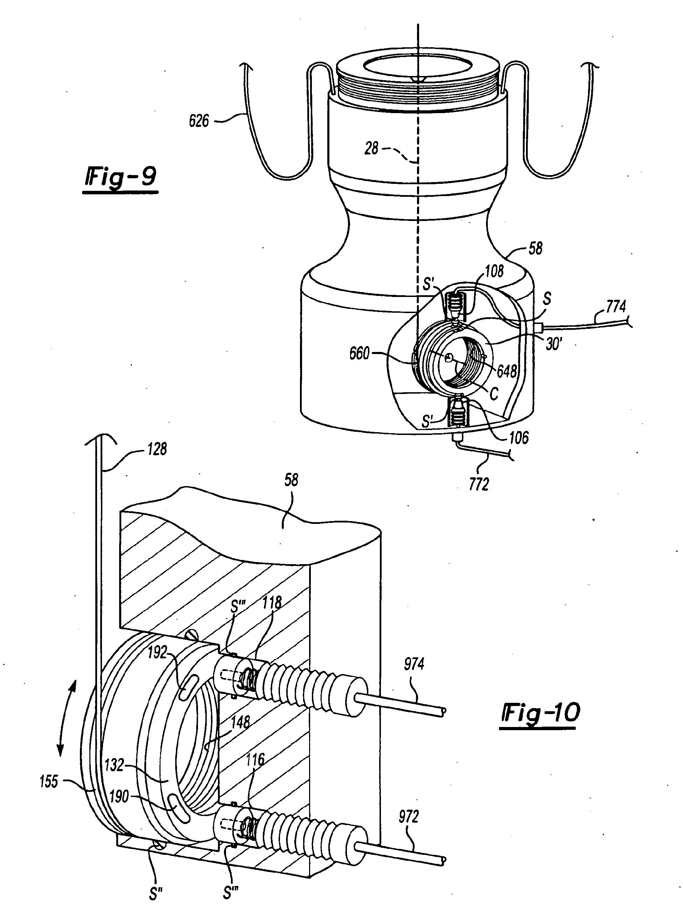

Figure 9 is another integral height leveling valve where inlet and exhaust valves are directly actuated by a cam in a radial direction not according to the present invention;
Figure 10 is another integral height leveling valve where a rotating valve plate has axial port valves not according to the present invention; and

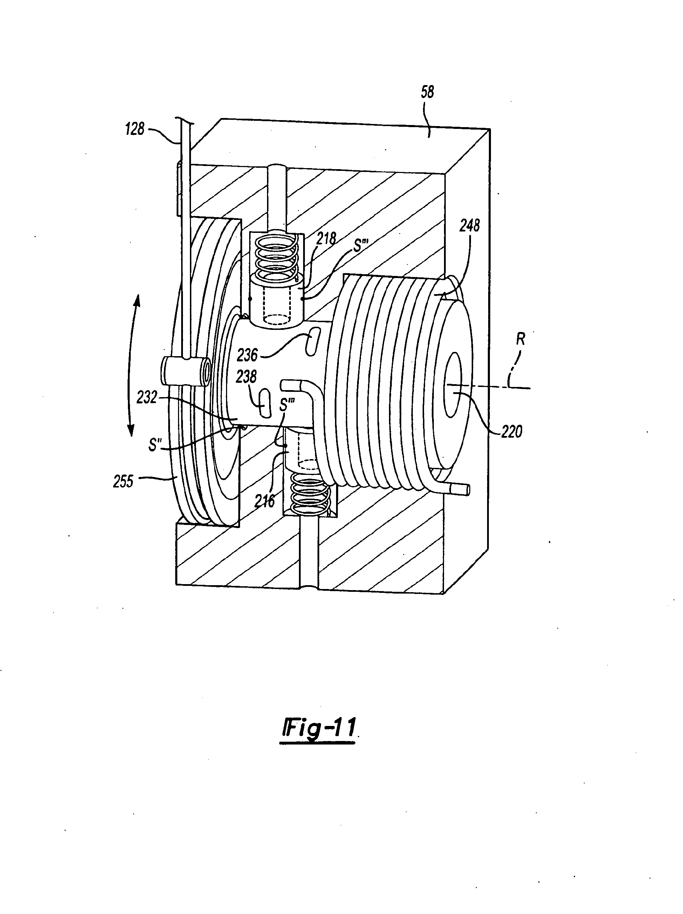

Figure 11 is another integral height leveling valve where a rotating valve has radial port valves not according to the present invention.

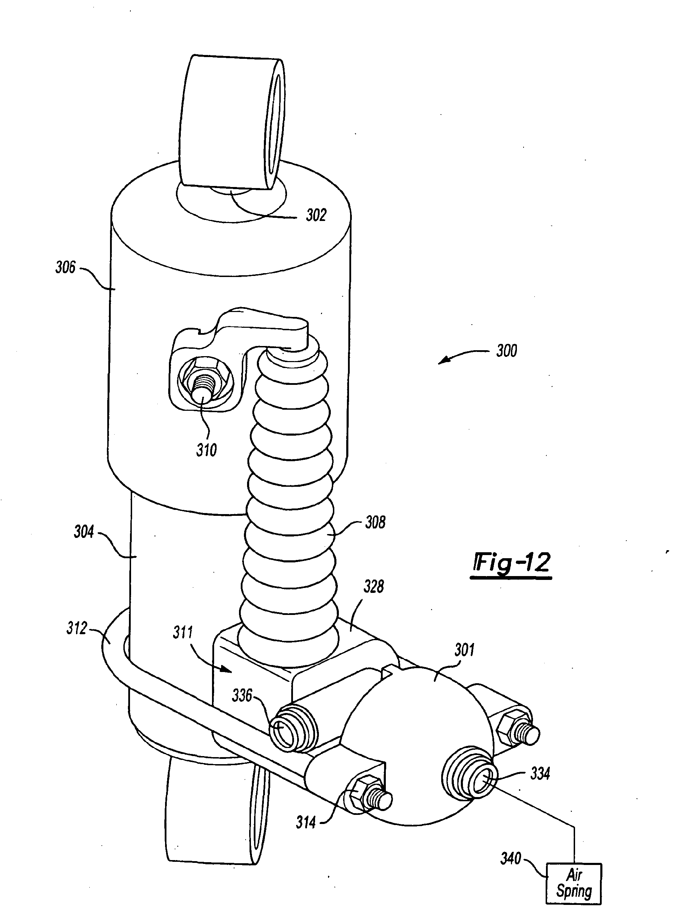

Figure 12 shows the present invention.

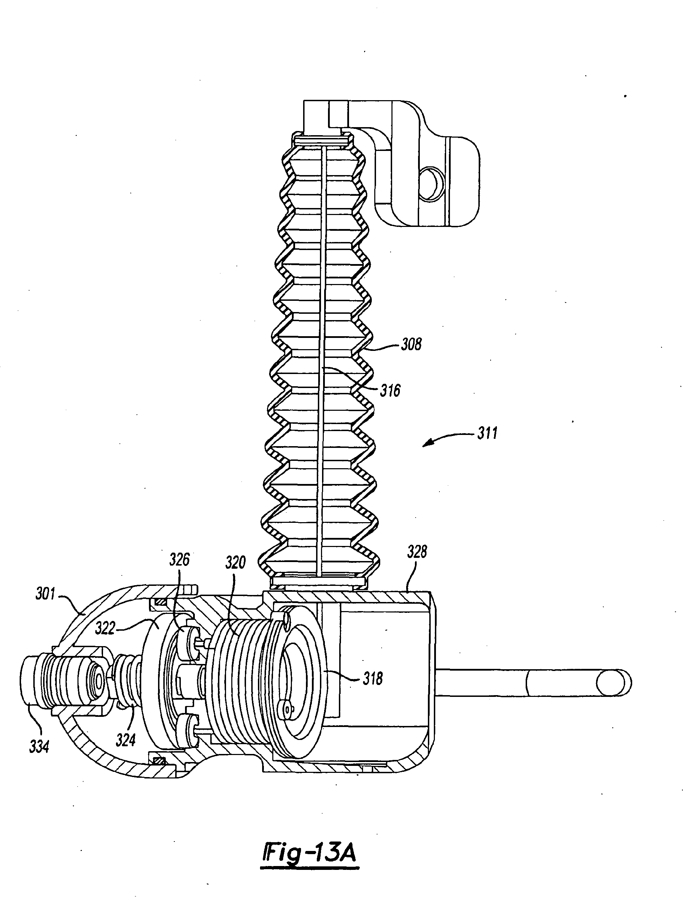

Figure 13A is a cross-sectional view through the height-leveling valve of Figure 12.

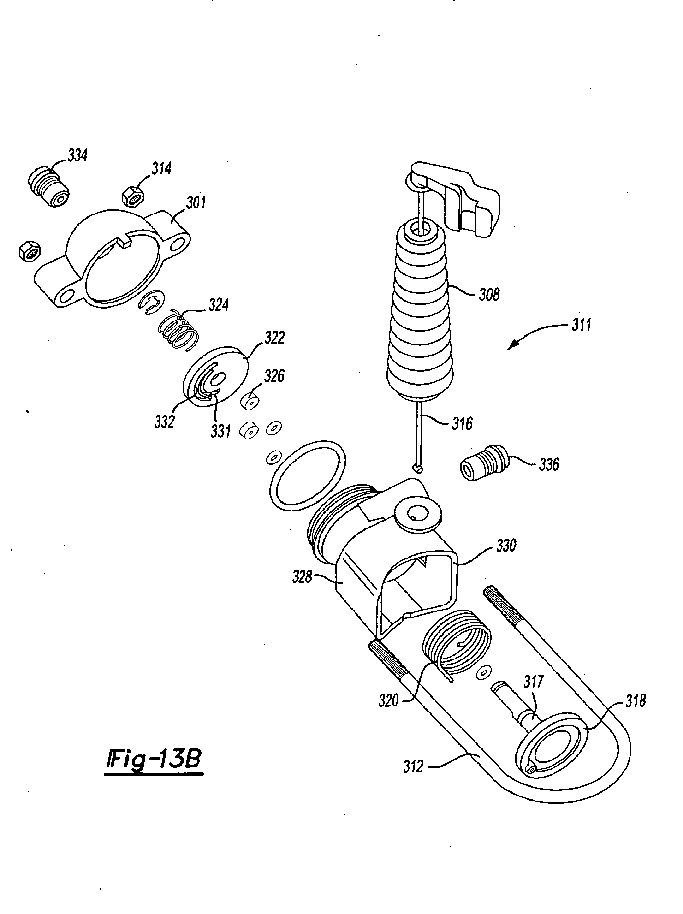

Figure 13B is an exploded view of the Figure 13A embodiment.

### DESCRIPTION OF THE PREFERRED EMBODIMENTS

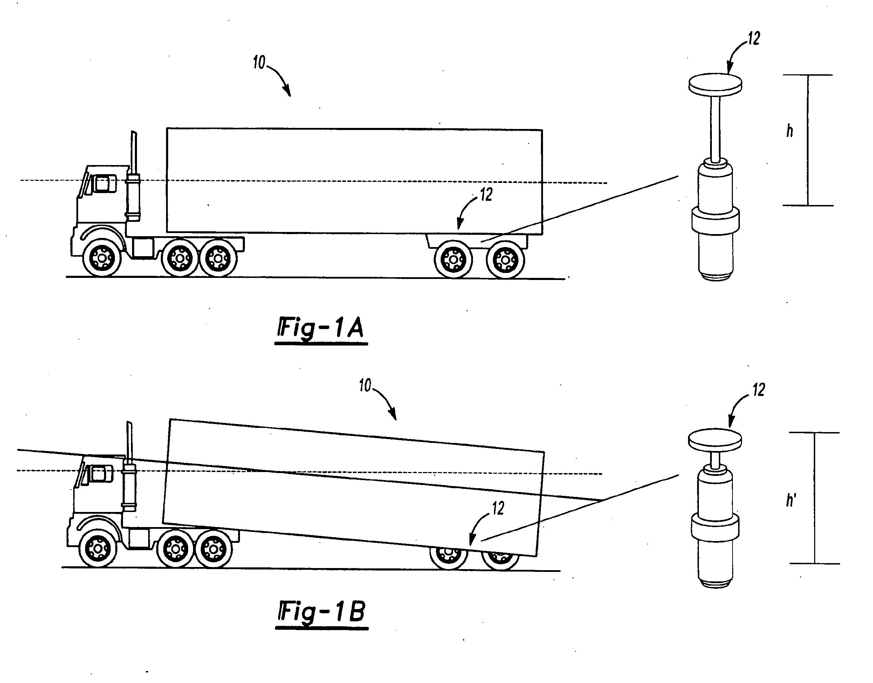

Referring to the Figures, a vehicle 10 having an air spring suspension 12 is shown in Figures 1A and 1B. In Figure 1A, the suspension is adjusted to a predetermined height h, wherein the fluid pressure within the suspension 12 falls within an acceptable range such that the vehicle 10 is relatively level. In Figure 1B, the vehicle is in a loaded condition, which can occur, for example, if an unevenly distributed load is placed on the vehicle 10. When this occurs, the suspension 12 falls below the acceptable range and the vehicle 10 is not level. A height leveling valve functions to bring the vehicle 10 level once again by adding fluid pressure within the suspension 12 to return the suspension 12 to the predetermined height h. Similarly, if load is removed from a vehicle 10, the suspension 12 would rise above the acceptable level and the height leveling valve will release fluid pressure from the air spring suspension 12 to bring the vehicle 10 level once again.

In Figure 2 a height leveling valve 14 (shown schematically in Figure 2 and in detail in Figure 3A') is incorporated into the upper end of a damper such as an air spring shock module 16. It should be understood that the term "damper" as utilized herein should be broadly construed to include air bags, shock absorbers, air springs, air spring shock modules and the like. A fluid cylinder 18 contains a piston P as generally known in the art. A piston rod 20 extends from the fluid piston P into a first housing 22, which is also the upper end of the air spring shock module 16. A second housing 24 surrounds the fluid cylinder 18. The second housing 24 is preferably a slip on component. An air bag (partially illustrated at 26) is attached to the first housing 22 and the second housing 24 to create an air chamber C as known in the art. Inlet and exhaust air lines 562, 564 attach to the first housing 22.

An actuating member 28 is connected to the valve 14. The actuating member 28 is preferably flexible such as a cable, wire, rope or other member which can be wrapped around a rotating cam 30 (Figure 3A'). In this embodiment, the height leveling valve 14 is contained within the first housing 22. The actuating member 28 extends from the first housing 22 and is fixed to the second housing 24. When the vehicle is at a ride height, corresponding to a specific distance between the first and second housings, the actuating member 28 allows the valve 14 to be closed and to neither add nor remove air from the vehicle air suspension to adjust vehicle height.

In this embodiment it may be desirable to be able to compensate for manufacturing tolerances in the damper assembly or vehicle air suspension by being able to adjust the unwound length of the actuating member 28 at the condition when the valve 14 is closed. Making fine adjustments to the unwound length of the actuating member 28 when this valve 14 is closed makes fine adjustments to the ride height of the air suspension for a particular vehicle. In a preferred embodiment this may be done by an adjusting screw at the point of attachment of the actuating member 28 to the second housing 24. However any means of making fine adjustments to the unwound length of actuating member 28 may be used in the first 22 or second 24 housing.

Figure 3A' is an exploded partial sectional view of the integral height leveling valve 14. The actuating member 28 is attached to the rotating cam 30. Preferably, the actuating member 28 winds around a spool portion 560 connected to the cam 30 such that changes in the unwound length of the actuating member 28 allow rotation of the cam 30 about axis R in one direction or the other. A sliding valve plate 32 sits adjacent the rotating cam 30, while a return spring 34 biases the sliding valve plate 32 toward the cam 30 such that rotation of the cam 30 linearly displaces the sliding valve plate 32 as shown by the double-headed arrow in Figure 3A'.

The sliding valve plate 32 includes an inlet flow path 36 and an exhaust flow path 38. There is a corresponding inlet flow path 566 and exhaust flow path 568 in the first housing 22. In this embodiment, the flow paths 566, 568 contain inlet and exhaust port valves 40, 41 with inlet and exhaust port valve pre-load springs 42, 43 to seal the flow paths 566, 568 against the sliding valve plate 32 when they are not aligned with flow paths 36, 38. The outside diameters of the port valves 40, 41 may be sealed to the first or second housing counter-bores they are contained in by use of a dynamic seal S'" such as an o-ring. However, any method of sealing the flow paths 566, 568 to the sliding valve plate 32 may be utilized.

Some portion of the flow paths 566, 568, their associated port valves 40, 41, or the flow paths 36, 38 in the sliding valve plate 32 is reduced in size to ensure only steady state changes in distance d (Figures 3B, 3C) allow any significant air flow/pressure change in the air spring suspension such as, for example, when an unevenly placed load is added or load removed. Having a point of air flow restriction ensures that a transitional change in distance d (Figure 3B) such as when the vehicle goes over a bump cannot effect significant air flow/pressure changes in chamber C (Figure 2) since a significant amount of air cannot pass through the valve 14 in such a short time interval.

If, as described above, the valve 14 is used within the housing 22, then the sliding valve plate 32 further includes an opening 44 to receive a retaining pin 46 that connects into housing 22. The valve 14 is at a radial offset to one side from the center of the first housing 22 away from the central location where the piston rod 20 attaches to the first housing 22.

An inlet air line 562 complete with a fitting connects with inlet flow path 566 in the housing 22 to convey air pressure from the vehicle supply source into the air spring shock module and in this preferred embodiment an exhaust air line 564, which may include a muffler to reduce exhaust air flow noise, connects with exhaust flow path 568 in the housing 22 to convey exhaust air flow out to the environment. Alternatively, the exhaust flow path 568 may exit directly to the environment with the exhaust flow path 568 sized near its exit from the housing 22 to the environment so as to reduce noise as the exhaust air flow leaves the valve 14. A moveable cover such as a flap may be used at the exit of the exhaust flow path 568 to the environment to prevent the entrance of contamination into the valve 14.

The air spring shock module 16 containing the valve 14 may be connected to one or more air spring shock modules or air springs mounted on the same air suspension but not having height leveling valves of their own. In this way, the valve 14 may control the pressure of all the air spring shock modules or air springs on the air suspension to maintain the vehicle at the predetermined height h (Figure 1A). The air pressure inside chamber C (Figure 2) of the air spring shock module 16 can be communicated to the other air spring shock modules or air springs on the same air suspension through air lines emerging from housing 22, or alternatively emerging from housing 24.

When the distance d between the first and second housings 22, 24 is at a predetermined height (Figure 3A), the actuating member 28 locates the cam 30 at a rotational position which linearly locates the valve plate 32 such that both inlet and exhaust flow paths are closed. That is, the current pressure within the air bag 26 (Figure 2) is maintained. The torsion spring 48 preferably maintains the actuating member 28 in tension. The predetermined range h is the vehicle ride height position.

When the distance d falls out of the range h (Figures 3B and 3C), the actuating member 28 extends or retracts around the spool portion 560, which is connected to the cam 30, against the torsion spring 48 tension to open the necessary flow path to regulate the fluid pressure.

Initially, the distance d is approximately equal to the height h, as shown in Figure 3A. The damper height increases or decreases in response to a load on the vehicle 10, thus increasing or decreasing the distance d between the first housing 22 and the second housing 24. If the distance d is less than height h (Figure 3B), this indicates fluid pressure must be added to the air spring suspension to regain height h with the increased load on the suspension. In this case, as shown in Figure 3B', the actuating member 28 allows the torsion spring 48 to rotate the cam 30 to retract the actuating member 28 around the spool portion 560 and to move the sliding valve plate 32 to align the inlet flow paths 36 and 566, thereby allowing fluid to pass through the center of the port valve 40 to enter the air spring to regulate the vehicle height (distance d).

If for example, load is removed from the vehicle, then the distance d increases beyond height h as shown in Figure 3C, which indicates the fluid pressure is now too high for the given load on the vehicle. When this distance d increases above height h (Figure 3C), the actuating member 28 rotates the cam 30 in the opposite direction against the tension of the torsion spring 48 to extend the actuating member 28 from around the spool portion 560 and to move the sliding valve plate 32 to align the exhaust flow paths 38 and 568, allowing fluid to pass through the center of the port valve 41 to exit the assembly as shown in Figure 3C' to regulate the vehicle height (distance d). In each case, as the distance d between the first housing 22 and the second housing 24 becomes substantially equal to h once again, the actuating member 28 also returns to a predetermined unwound length, which allows the cam 30 to rotate, and the biased sliding valve plate 32 to move, so that both flow paths 566, 568 are once again closed (Figure 3A').

The valve 14a may also be incorporated into the lower end of an air spring shock module 50, as shown in Figure 4. A piston rod 54 extends from a cylinder 52 into a first housing 56. A second housing 58 surrounds the cylinder 52. An air bag 60 is attached to the first housing 56 and the second housing 58 to create an air chamber. A height leveling valve 14a in this embodiment 50 is contained in the second housing 58. An actuating member 28a is connected to the cam (Figure 3A') within the second housing 58 and is fixedly connected to the first housing 56. Inlet and exhaust air lines 762, 764 attach to the second housing 58.

A benefit of having the valve located in the second housing when the valve is controlling the ride height of a truck cabin air spring suspension, is easier routing of air lines to the valve and the avoidance of continual air line flexing during cabin suspension movements as would occur if the valve were contained in the first housing. This benefit results from inlet supply and exhaust air lines typically being routed on the truck frame which is also the attachment point for the lower end of the air spring shock module. The upper end of the air spring shock module would typically connect to a cabin floor.

In Figure 5 a height leveling valve 14b is incorporated into a shock absorber 70. A cylinder 72 contains a piston P' as known in the art. A piston rod 74 extends from the cylinder 72 into a first housing 76. A second housing 78 surrounds the cylinder 72. In this embodiment a dust tube (partially shown at 80) is attached to the first housing 76 to prevent dust from collecting on the rod 74. However any method of keeping dust off the rod 74 may be used. The height leveling valve 14b is contained within the first housing 76. The actuating member 28b, which is connected to the cam (Figure 3A') within the first housing 76, extends from the first housing 76 and is fixedly connected to the second housing 78. Inlet and exhaust air lines 862, 864 attach to the first housing 76.

When incorporating the valve 14b into a shock absorber 70 (Figure 5), there is no air bag to form a chamber C (Figure 2) and to seal the pressurized air in the valve from ambient air. It is preferred to add a seal S (Figure 3A') within the first housing 76 to seal on the outside diameter of the spool portion 560 at its juncture with the cam 30. This leaves the spool portion 560 and the actuating member 28 at ambient pressure with all other parts of the valve 14b sealed and able to maintain elevated pressures. While a seal such as an O-ring is preferred, any suitable seal may be used in the present invention.

When used in a shock absorber, the valve assembly 14b operates to maintain vehicle height through the maintenance of air pressure in a separate air spring in a manner similar to, for example, that described in Figures 3A', 3B' and 3C'. It should be understood that multiple air springs or the like may be controlled remotely by a single valve assembly on a single shock absorber or other member. That is, the one valve assembly on a single air spring member or the like also controls a plurality of air spring members or the like.

The valve 14b, however, alternatively or additionally is used to measure the distance d between the housings 76, 78 and then utilizes this information to remotely control a variety of remote devices such as an air spring or another device. The linear measurement taken from the sliding valve plate or a rotational measurement from the cam is sent to a controller (Figure 5) and is utilized for a variety of applications, i.e. sending distance d to a remote air spring or other device, for example.

In Figure 6 a height leveling valve 14c is incorporated into another shock absorber 90. The height leveling valve 14c is contained within a second housing 92 as described with respect to Figure 5. Inlet and exhaust air lines 962, 964 attach to the second housing 92.

Referring to Figure 7A, another integral height leveling valve 14' includes a rotating cam 30' which directly engages an inlet spring biased valve 94 and an exhaust spring biased valve 96. The valves 94, 96 are located in an axial direction relative to the rotating cam 30'. The rotating cam 30' rotates about a cam axis R. The valves 94, 96 may alternatively or additionally include poppet, ball or other valves which are selectively opened by overcoming a spring or other bias. Alternately a single spool valve may be directly activated by the rotating cam 30' and used in place of separate inlet and exhaust valves.

The rotating cam 30' includes an inclined surface 98 (Figure 8) which does not engage the inlet spring biased valve 94 and the exhaust spring biased valve 96 when the vehicle is at the desired height h (Figure 1A). Both the inlet spring biased valve 94 and the exhaust spring biased valve 96 are closed (Figure 7A). When the distance d falls out of the desired range (Figures 7B and 7C), the actuating member 28 retracts around or extends from around a spool portion 660 connected to the cam 30' against the torsion spring 48 tension. When the distance d is less than the desired height, the cam profile, which is inclined surface 98 (Figure 8) and which activates the valves in a direction parallel to the cam axis R, engages and opens the inlet spring biased valve 94 (Figure 7B) to increase air pressure in the air spring suspension and increase the vehicle height toward the desired height. When the distance d is greater than the desired height, the inclined surface 98 engages and distance d is greater than the desired height, the inclined surface 98 engages and opens the exhaust spring biased valve 96 (Figure 7C) to release air pressure and decrease the vehicle height toward the desired height h.

An example of a height leveling valve in the second housing 58, onto which the lower end of an air bag 626 is attached similar to that shown in Figure 4, is shown in Figure 9. The rotating cam 30' is controlled by actuating member 28 which wraps around the spool portion 660 connected to the cam 30'. The actuating member 28 is kept in tension by torsion spring 648 acting on cam 30' and connected to spool portion 660. A rotating cam radial profile controllably activates inlet spring biased valve 106 and exhaust spring biased valve 108 placed in a radial direction about the cam axis R to control vehicle height depending upon the vehicle loading. The height leveling valve is shown in Figure 9 with the air spring shock module at full extension, resulting in the exhaust valve 108 being open to release air pressure from the air bag 626 to return the air suspension to ride height. Also, as shown in Figure 9, an inlet air line 772 and an exhaust air line 774 are connected to flow passages through the inlet spring biased valve 106 and exhaust spring biased valve 108, respectively at their exits from the lower housing wall.

When the height leveling valve (Figures 7A, 7B, 7C, 9) is used in a shock absorber and no air bag is present (Figures 5, 6), in an example embodiment a seal S is placed in the first or second housing to contact an outside diameter of spool portion 660 at its juncture with the cam 30' to contain pressurized air within the valve. The actuating member 28 and spool portion 660 will be at ambient pressure. In another embodiment the actuating member 28, spool portion 660 and cam 30' are at ambient pressure where the directly actuated valves 106, 108 (Figure 9) contain seals S' to isolate the air pressure they control from the ambient.

In Figure 10 the actuating member 128 controls the movement of a rotating valve plate 132. The inlet spring pre-loaded port valve 116 and exhaust spring pre-loaded port valve 118, shown for example as in the housing 58 (similar to that in Figure 4), seal axially against the rotating valve plate 132. Dynamic seals S"' such as O rings can be used to seal the port valves to the housing. When the vehicle is at the desired height h, the rotating valve plate 132 is rotationally aligned so that the inlet port valve 116 and the exhaust port valve 118 are in contact with a portion of the valve plate that contains no air flow openings. The air flow openings are preferably arcuate slot-like openings 190, 192 through the rotating valve plate 132. If the vehicle height falls below the desired level, the actuating member 128 allows the torsion spring 148 to rotate the spool portion 155 and connected rotating valve plate 132 to retract the actuating member 128 around the spool portion 155 and to align the flow passage through the inlet port valve 116 with an inlet flow passage 190 in the rotating valve plate 132 to allow inlet air flow. If the vehicle rises above the desired height, the actuating member 128 rotates the spool portion 155 and connected rotating valve plate 132 against the torsion spring 148 tension to extend the actuating member 128 and align the flow passage through the exhaust port valve 118 with an exhaust flow passage 192 in the valve plate to allow exhaust air flow. An inlet air line 972 and an exhaust air line 974 are connected to the inlet port valve 116 and exhaust port valve 118, respectively at the points where they exit from the housing.

In Figure 11, another arrangement includes an inlet spring pre-loaded port valve 216 and an exhaust spring pre-loaded port valve 218, shown for example as in the housing 58 (similar to that in Figure 4), having a radial spacing about the rotating valve axis R, and which seal against an outside diameter surface of rotating valve 232. Seals S'" such as O rings can be used to seal the port valves to the housing. The changing unwound lengths of actuating member 128 cause interlocked spool 255 and rotating valve 232 to rotate against tension of torsion spring 248 to increase or decrease the air spring suspension air pressure to maintain desired vehicle height by aligning the inlet flow path 236 or exhaust flow path 238 in the rotating valve with the corresponding flow path through the inlet port valve 216 or exhaust port valve 218. The air flow passing through port valves 216, 218 into or from flow paths 236, 238 on the outside diameter surface of rotating valve 232 is carried into or out of the air spring by passing between the outside diameter surface of rotating valve 232 and the corresponding bore in housing 58 or through a hollow center 220 of the rotating valve 232. Inlet and exhaust air lines are connected to inlet and exhaust flow paths through port valves 216, 218 where they exit the housing.

Isolating air pressure inside the height leveling valve (Figure 10) from ambient pressure for shock absorber applications (Figures 5, 6) where no air bag is present can be accomplished by a seal S" in the first or second housing that seals against the outside diameter of spool portion 155 at its juncture with the rotating valve plate 132 (Figure 10). Similarly, the height leveling valve of Figure 11 can use a seal S" against the outside diameter of rotating valve 232 at its juncture with the spool 255.

Another embodiment 300 is illustrated in Figure 12. In this embodiment, the piston rod 302 moves within a cylinder housing 304. A housing 306 moves with the piston rod 302.

An actuating member is within a boot 308 and pinned at 310 to the housing 306. A u-bolt 312 and nuts 314 secure the housing cover 301 and housing 328 of height leveling valve 311 to cylinder housing 304. An air supply line 336 supplies pressurized air through the valve 311, as will be explained below. A connection 334 connects to a remote air spring 340.

As with the prior embodiments, when the piston rod 302 and housing 306 move relative to the cylinder housing 304, then the actuating member actuates the valve to supply or dump air from the air spring 340.

As shown in Figure 13A, this embodiment is somewhat similar to the Figure 10 embodiment. The boot 308 covers a flexible actuating member 316. This member 316 turns a spool 318. A spring 320 and spring 324 operate similar to the Figure 10 embodiment.

A rotating valve plate 322 turns with the spool 318. Valve members 326 operate similar to the Figure 10 embodiment.

As shown in Figure 13B, the valve plate 322 has two radially spaced grooves 331 and 332. One groove serves to communicate pressurized fluid from source 336 to the connection 334 to the air spring. The other groove dumps air from the air spring. As shown, the spool 318 includes a shaft 317 which drives the valve plate 322. As also shown, a forward face 330 of the housing 328 for the height leveling valve 311 is curved such that it conforms to the outer surface of the housing 304.

With this embodiment, the height leveling valve can be easily added to existing shock absorber assemblies, by merely bolting the height leveling valve to the shock absorber body, and pinning it at 310.

The height leveling valve as previously described can also be used separate from dampers consisting of air bags, shock absorbers, air springs or air spring shock modules, and can be mounted between a fixed suspension member and a member of the suspension that telescopes relative to the fixed member to control an air suspension height.

## Claims

1. A shock absorber assembly comprising:
a first housing (306) having a piston and piston rod (302) movable with said first housing (306), and a second housing (304) movable relative to said first housing (306) and said piston, said piston being received within said second housing (304), said second housing (304) defining a fluid cylinder to receive said piston;
a height leveling valve (311) connected to one of said first and second housings (306, 304) by a flexible actuating member (316), and connected to move with the other of said first and second housings (306, 304), said flexible actuating member (316) actuating said height leveling valve (311) to supply or dump pressurized air to an associated air spring; and
wherein said flexible actuating member (316) has one end associated with said first housing (306) and an opposite end associated with said height leveling valve (311) **characterised in that** said flexible actuating member (28) is located external to said first housing (306).

2. The shock absorber assembly as recited in claim 1, wherein said shock absorber assembly comprises an air spring shock module (300).

3. The shock absorber assembly as recited in claim 2, wherein said air spring shock module (300) comprises an air bag attached between said first housing (306) and said second housing (304).

4. The shock absorber as recited in claim 1, including a boot (308) having one end pinned to said first housing (306) at an external mount and wherein said flexible actuating member (316) is located within said boot (308).

5. The shock absorber assembly as recited in any preceding claim, wherein said flexible actuating member (316) actuates a spool (318) to further rotate a valve plate (322) to supply or dump air from the associated air spring, and wherein said spool (318) includes a shaft that drives said valve plate (322).

6. The shock absorber assembly as recited in claim 5, including a spring loaded inlet valve and a spring loaded exhaust valve that seal axially against said valve plate (322), and wherein said valve plate (322) includes two radially spaced grooves (331, 332) with one of said two radially spaced grooves (331, 332) cooperating with said spring loaded inlet valve to communicate pressurized air to the associated air spring and said other of said two radially spaced grooves (331, 332) cooperating with said spring loaded outlet valve to dump air from the associated air spring.

7. The shock absorber assembly as recited in claim 4, wherein said height leveling valve (311) includes a valve housing that is mounted to said second housing (304), and wherein an opposite end of said boot (308) is mounted to an upper surface of said valve housing.

8. The shock absorber assembly as recited in claim 7 including a fastener connection to secure a housing cover (301) and said valve housing to said second housing (304).

9. The shock absorber assembly as recited in claim 8, wherein said fastener connection comprises a u-bolt (312).

10. The shock absorber as recited in claim 8, wherein the associated air spring is mounted remotely from said shock absorber assembly, and wherein said housing cover (301) includes a connection that connects to the remote air spring, said height leveling valve (311) for communicating air to and from the associated remote air spring through said connection.

11. A height leveling valve (311) for use in association with a shock absorber and air spring, said height leveling valve (311) comprising:
a valve housing for receiving a rotating member, and a flexible actuating member (316) for rotating said rotating member, said valve housing is to be connected to one of a piston rod housing and a cylinder housing in a shock absorber, and said flexible actuating member (316) is to be connected to the other of the piston rod housing and the cylinder housing, said height leveling valve (311) selectively communicating with two spaced ports to supply or dump pressurized air to an associated air spring as said rotating member rotates, **characterised in that** said flexible actuating member (316) is external to both said piston rod housing and said cylinder housing.

12. The height leveling valve (311) as recited in claim 11, wherein said rotating member includes two grooves at distinct radial positions such that one groove is located radially outwardly relative to the other groove, said two grooves being utilized to selectively communicate or dump pressurized air to the associated air spring.

13. A method of operating a shock absorber and air spring comprising the steps of:
a) providing a shock absorber having a piston mounted to move with a first housing (306), and a second housing (304) for defining a cylinder to receive said piston, providing a height leveling valve (311) fixed to move with one of said first and second housings (22, 24), and a flexible actuating member (316), connected to the other of said first and second housings (306, 304) for selectively actuating said height leveling valve (311), said height leveling valve (311) being operable to selectively provide or dump pressurized air to an associated air spring; and
b) mounting said shock absorber and associated air spring on a vehicle (10), and allowing said first and second housings (306, 304) to move relative to each other in response to forces on the vehicle (10), movement of said first and second housings (306, 304) relative to each other actuating said height leveling valve (311), and communicating air to said associated air spring if additional air is needed at said associated air spring, and dumping air from said associated air spring if less air is needed at the associated air spring, **characterised in that** said flexible actuating member (316) is external to both said first and second housings (306, 304).

14. The method as recited in claim 13, including mounting said flexible actuating member (316) within a boot (308) that has one end pinned to one of said first and second housings (306, 304) and an opposite end mounted to a height leveling valve housing (328) that houses said height leveling valve (311) and which is fixed to move with said other of said first and second housing (306, 304).

15. The method as recited in claim 13, including remotely mounting said associated air spring from said shock absorber.

16. The method as recited in claim 14, including pinning said one end of said boot (308) to said first housing (22) and bolting said height leveling valve housing (328) to said second housing (24).

17. The height leveling valve (311) as recited in claim 11, including a u-bolt assembly that secures said valve housing to said one of said piston rod housing and said cylinder housing (304).

18. The height leveling valve (311) as recited in claim 11, including a boot (308) that receives said flexible actuating member (316), said boot (308) having one end pinned to one of said piston rod housing and said cylinder housing (304) and an opposite end mounted to said valve housing.

19. A method of assembling a shock absorber assembly including the steps of:-
providing a first housing (306) having a piston and piston rod (302) moveable with said first housing (306), and a second housing (304) moveable relative to said first housing (306) and said piston, said piston being received within said second housing (304), said second housing (304) defining a fluid cylinder to receive said piston;
providing a height leveling valve (311) including a flexible actuating member (316); **characterized in that** said flexible actuating member (316) is external to both said first and second housings (306, 304) then
connecting the height leveling valve (311) to one of said first and second housings (306, 304) to move with said one of said first and second housings (306, 304); and
connecting the flexible actuating member (316) to the other of said first and second housings (306, 304) so that said flexible actuating member (316) actuates said height leveling valve (311) to supply or dump pressurized air to an associated air spring.

20. The method of as defined in claim 19 wherein the height leveling valve (311) is bolted to said one of said first and second housings (306, 304) and said flexible actuating member (316) is pinned to the other of said first and second housings (306, 304).

## Patentansprüche

1. Stoßdämpferaufbau, umfassend:
ein erstes Gehäuse (306) mit einem Kolben und einer Kolbenstange (302), die mit dem ersten Gehäuse (306) beweglich sind, und ein zweites Gehäuse (304), das in Bezug auf das erste Gehäuse (306) und den Kolben beweglich ist, wobei der Kolben in dem zweiten Gehäuse (304) aufgenommen wird, wobei das zweite Gehäuse (304) einen Fluidzylinder zur Aufnahme des Kolbens definiert;
ein Niveauregulierungsventil (311), das durch ein biegsames Betätigungselement (316) mit dem ersten oder dem zweiten Gehäuse (306, 304) verbunden ist und so angeschlossen ist, dass es sich mit dem jeweils anderen ersten oder zweiten Gehäuse (306, 304) bewegt, wobei das biegsame Betätigungselement (316) das Niveauregulierungsventil (311) so betätigt, dass Druckluft zu einer zugehörigen Luftfeder geliefert oder davon abgelassen wird; und
wobei das biegsame Betätigungselement (316) ein Ende, das mit dem ersten Gehäuse (306) verbunden ist, und ein entgegengesetztes Ende, das mit dem Niveauregulierungsventil (311) verbunden ist, aufweist, **dadurch gekennzeichnet, dass** sich das biegsame Betätigungselement (28) außerhalb des ersten Gehäuses (306) befindet.

2. Stoßdämpferaufbau nach Anspruch 1, wobei der Stoßdämpferaufbau ein Luftfeder-Stoßmodul (300) umfasst.

3. Stoßdämpferaufbau nach Anspruch 2, wobei das Luftfeder-Stoßmodul (300) ein Luftkissen umfasst, das zwischen dem ersten Gehäuse (306) und dem zweiten Gehäuse (304) angebracht ist.

4. Stoßdämpferaufbau nach Anspruch 1, umfassend einen Faltenbalg (308), wovon ein Ende an einer externen Anbringung an dem ersten Gehäuse (306) befestigt ist, und wobei sich das biegsame Betätigungselement (316) in dem Faltenbalg (308) befindet.

5. Stoßdämpferaufbau nach einem der vorhergehenden Ansprüche, wobei das biegsame Betätigungselement (316) eine Spule (318) betätigt, damit eine Ventilplatte (322) so gedreht wird, dass Luft zu der zugehörigen Luftfeder geliefert oder davon abgelassen wird, wobei die Spule (318) eine Welle umfasst, die die Ventilplatte (322) antreibt.

6. Stoßdämpferaufbau nach Anspruch 5, umfassend ein federbelastetes Einlassventil und ein federbelastetes Ausstoßventil, die axial gegen die Ventilplatte (322) abdichten, und wobei die Ventilplatte (322) zwei radial beabstandete Nuten (331, 332) umfasst, wobei eine der beiden radial beabstandeten Nuten (331, 332) mit dem federbelasteten Einlassventil zusammenwirkt, um Druckluft zu der angeschlossenen Luftfeder zu übertragen, und die andere der beiden radial beabstandeten Nuten (331, 332) mit dem federbelasteten Auslassventil zusammenwirkt, um Luft von der angeschlossenen Luftfeder abzulassen.

7. Stoßdämpferaufbau nach Anspruch 4, wobei das Niveauregulierungsventil (311) ein Ventilgehäuse umfasst, das an dem zweiten Gehäuse (304) angebracht ist, und wobei ein entgegengesetztes Ende des Faltenbalgs (308) an einer oberen Fläche des Ventilgehäuses angebracht ist.

8. Stoßdämpferaufbau nach Anspruch 7, umfassend eine Befestigungsverbindung, um eine Gehäuseabdeckung (301) und das Ventilgehäuse an dem zweiten Gehäuse (304) zu befestigen.

9. Stoßdämpferaufbau nach Anspruch 8, wobei die Befestigungsverbindung eine Bügelschraube (312) umfasst.

10. Stoßdämpferaufbau nach Anspruch 8, wobei die angeschlossene Luftfeder von dem Stoßdämpferaufbau entfernt angebracht ist, und wobei die Gehäuseabdeckung (301) eine Verbindung umfasst, die mit der entfernten Luftfeder verbunden ist, wobei das Niveauregulierungsventil (311) dazu dient, Luft durch die Verbindung zu und von der angeschlossenen entfernten Luftfeder zu übertragen.

11. Niveauregulierungsventil (311) zur Verwendung in Verbindung mit einem Stoßdämpfer und einer Luftfeder, wobei das Niveauregulierungsventil (311) Folgendes umfasst:
ein Ventilgehäuse zur Aufnahme eines drehenden Elements, und ein biegsames Betätigungselement (316) zum Drehen des drehenden Elements, wobei das Ventilgehäuse mit einem Kolbenstangengehäuse oder einem Zylindergehäuse in einem Stoßdämpfer verbunden werden soll, und das biegsame Betätigungselement (316) mit dem jeweils anderen Kolbenstangengehäuse oder Zylindergehäuse verbunden werden soll, wobei das Niveauregulierungsventil (311) selektiv mit zwei beabstandeten Anschlüssen in Verbindung tritt, um Druckluft zu einer angeschlossenen Luftfeder zu liefern oder davon abzulassen, wenn sich das drehende Element dreht, **dadurch gekennzeichnet, dass** sich das biegsame Betätigungselement (316) sowohl außerhalb des Kolbenstangengehäuses als auch des Zylindergehäuses befindet.

12. Niveauregulierungsventil (311) nach Anspruch 11, wobei das drehende Element zwei Nuten so an getrennten radialen Positionen umfasst, dass sich eine Nut in Bezug auf die andere Nut radial auswärts befindet, wobei die beiden Nuten benutzt werden, um selektiv Druckluft zu der angeschlossenen Luftfeder zu übertragen oder davon abzulassen.

13. Verfahren zum Betreiben eines Stoßdämpfers und einer Luftfeder, umfassend die folgenden Schritte:
a) Bereitstellen eines Stoßdämpfers, aufweisend einen Kolben, der so angebracht ist, dass er sich mit einem ersten Gehäuse (306) bewegt, und ein zweites Gehäuse (304), um einen Zylinder zur Aufnahme des Kolbens zu definieren, Bereitstellen eines Niveauregulierungsventils (311), das so fixiert ist, dass es sich mit dem ersten oder dem zweiten Gehäuse (22, 24) bewegt, und eines biegsamen Betätigungselements (316), das mit dem jeweils anderen ersten oder zweiten Gehäuse (306, 304) verbunden ist, um das Niveauregulierungsventil (311) selektiv zu betätigen, wobei das Niveauregulierungsventil (311) dazu betreibbar ist, selektiv Druckluft zu einer angeschlossenen Luftfeder zu liefern oder davon abzulassen, und
b) Anbringen des Stoßdämpfers und der angeschlossenen Luftfeder an einem Fahrzeug (10), und Zulassen, dass sich das erste und das zweite Gehäuse (306, 304) als Reaktion auf Kräfte auf das Fahrzeug (10) in Bezug zueinander bewegen, wobei die Bewegung des ersten und des zweiten Gehäuses (306, 304) in Bezug zueinander das Niveauregulierungsventil (311) betätigt und Luft zu der angeschlossenen Luftfeder übertragen wird, wenn an der angeschlossenen Luftfeder zusätzliche Luft benötigt wird, und Luft aus der angeschlossenen Luftfeder abgelassen wird, wenn an der angeschlossenen Luftfeder weniger Luft benötigt wird, **dadurch gekennzeichnet, dass** sich das biegsame Betätigungselement (316) außerhalb sowohl des ersten als auch des zweiten Gehäuses (306, 304) befindet.

14. Verfahren nach Anspruch 13, umfassend das Anbringen des biegsamen Betätigungselements (316) in einem Faltenbalg (308), wovon ein Ende an dem ersten oder dem zweiten Gehäuse (306, 304) befestigt ist und ein entgegengesetztes Ende an einem Niveauregulierungsventilgehäuse (328) angebracht ist, welches das Niveauregulierungsventil (311) aufnimmt, und welches so fixiert ist, dass es sich mit dem jeweils anderen ersten oder zweiten Gehäuse (306, 304) bewegt.

15. Verfahren nach Anspruch 13, umfassend das Anbringen der angeschlossenen Luftfeder an einer von dem Stoßdämpfer entfernten Stelle.

16. Verfahren nach Anspruch 14, umfassend das Befestigen des einen Endes des Faltenbalgs (308) an dem ersten Gehäuse (22) und das Schrauben des Niveauregulierungsventilgehäuses (328) an das zweite Gehäuse (24).

17. Niveauregulierungsventil (311) nach Anspruch 11, umfassend einen Bügelschraubenaufbau, der das Ventilgehäuse an dem Kolbenstangengehäuse oder dem Zylindergehäuse (304) befestigt.

18. Niveauregulierungsventil (311) nach Anspruch 11, umfassend einen Faltenbalg (308), der das biegsame Betätigungselement (316) aufnimmt, wobei ein Ende des Faltenbalgs (308) an dem Kolbenstangengehäuse oder dem Zylindergehäuse (304) befestigt ist und ein entgegengesetztes Ende an dem Ventilgehäuse angebracht ist.

19. Verfahren zum Zusammenbau eines Stoßdämpferaufbaus, umfassend die folgenden Schritte:
Bereitstellen eines ersten Gehäuses (306) mit einem Kolben und einer Kolbenstange (302), die mit dem ersten Gehäuse (306) beweglich sind, und eines zweiten Gehäuses (304), das in Bezug auf das erste Gehäuse (306) und den Kolben beweglich ist, wobei der Kolben in dem zweiten Gehäuse (304) aufgenommen wird, wobei das zweite Gehäuse (304) einen Fluidzylinder zur Aufnahme des Kolbens definiert;
Bereitstellen eines Niveauregulierungsventils (311), das ein biegsames Betätigungselement (316) umfasst; **dadurch gekennzeichnet, dass** sich das biegsame Betätigungselement (316) außerhalb sowohl des ersten als auch des zweiten Gehäuses (306, 304) befindet, dann
derartiges Verbinden des Niveauregulierungsventils (311) mit dem ersten oder dem zweiten Gehäuse (306, 304), dass es sich mit dem ersten oder dem zweiten Gehäuse (306, 304) bewegt; und
derartiges Verbinden des biegsamen Betätigungselements (316) mit dem jeweils anderen ersten oder zweiten Gehäuse (306, 304), dass das biegsame Betätigungselement (316) das Niveauregulierungsventil (311) betätigt, um Druckluft zu einer angeschlossenen Luftfeder zu liefern oder davon abzulassen.

20. Verfahren nach Anspruch 19, wobei das Niveauregulierungsventil (311) an das erste oder das zweite Gehäuse (306, 304) geschraubt ist, und das biegsame Betätigungselement (316) an dem jeweils anderen ersten oder zweiten Gehäuse (306, 304) befestigt ist.

## Revendications

1. Ensemble d'absorbeur de chocs, comprenant :
un premier logement (306) ayant un piston et une tige de piston (302) pouvant être déplacés avec ledit premier logement (306), et un deuxième logement (304) pouvant être déplacé par rapport audit premier logement (306) et audit piston, ledit piston étant reçu à l'intérieur dudit deuxième logement (304), ledit deuxième logement (304) définissant un vérin hydraulique pour recevoir ledit piston ;
une vanne de mise à niveau (311) connectée à l'un desdits premier et deuxième logements (306, 304) par un élément d'actionnement flexible (316), et connectée pour se déplacer avec l'autre desdits premier et deuxième logements (306, 304), ledit élément d'actionnement flexible (316) actionnant ladite vanne de mise à niveau (311) pour fournir de l'air comprimé à un ressort pneumatique associé ou pour évacuer de l'air comprimé de ce dernier ; et
ledit élément d'actionnement flexible (316) ayant une extrémité associée audit premier logement (306) et une extrémité opposée associée à ladite vanne de mise à niveau (311), **caractérisé en ce que** ledit élément d'actionnement flexible (28) est situé à l'extérieur dudit premier logement (306).

2. Ensemble d'absorbeur de chocs selon la revendication 1, dans lequel ledit ensemble d'absorbeur de chocs comprend un module amortisseur à ressort pneumatique (300).

3. Ensemble d'absorbeur de chocs selon la revendication 2, dans lequel ledit module amortisseur à ressort pneumatique (300) comprend un coussin pneumatique fixé entre ledit premier logement (306) et ledit deuxième logement (304).

4. Ensemble d'absorbeur de chocs selon la revendication 1, comportant un soufflet de protection (308) ayant une extrémité attachée audit premier logement (306) au niveau d'un support externe et dans lequel ledit élément d'actionnement flexible (316) est situé à l'intérieur dudit soufflet de protection (308).

5. Ensemble d'absorbeur de chocs selon l'une quelconque des revendications précédentes, dans lequel ledit élément d'actionnement flexible (316) actionne un tiroir (318) pour faire tourner davantage une plaque de vanne (322) afin de fournir de l'air au ressort pneumatique associé ou d'évacuer de l'air de ce dernier, et dans lequel ledit tiroir (318) comporte une tige qui entraîne ladite plaque de vanne (322).

6. Ensemble d'absorbeur de chocs selon la revendication 5, comportant une vanne d'admission chargée par ressort et une vanne d'échappement chargée par ressort qui s'appuient axialement de manière étanche contre ladite plaque de vanne (322), et dans lequel ladite plaque de vanne (322) comporte deux rainures espacées radialement (331, 332), l'une desdites deux rainures espacées radialement (331, 332) coopérant avec ladite vanne d'admission chargée par ressort pour communiquer de l'air comprimé au ressort pneumatique associé et ladite autre desdites deux rainures espacées radialement (331, 332) coopérant avec ladite vanne d'échappement chargée par ressort pour évacuer de l'air du ressort pneumatique associé.

7. Ensemble d'absorbeur de chocs selon la revendication 4, dans lequel ladite vanne de mise à niveau (311) comporte un boîtier de vanne qui est monté sur ledit deuxième logement (304), et dans lequel une extrémité opposée dudit soufflet de protection (308) est montée sur une surface supérieure dudit boîtier de vanne.

8. Ensemble d'absorbeur de chocs selon la revendication 7, comportant une connexion de fixation pour fixer un couvercle de boîtier (301) et ledit boîtier de vanne audit deuxième logement (304).

9. Ensemble d'absorbeur de chocs selon la revendication 8, dans lequel ladite connexion de fixation comprend un boulon en U (312).

10. Ensemble d'absorbeur de chocs selon la revendication 8, dans lequel le ressort pneumatique associé est monté à distance dudit ensemble d'absorbeur de chocs, et dans lequel ledit couvercle de boîtier (301) comporte une connexion qui se raccorde au ressort pneumatique distant, ladite vanne de mise à niveau (311) servant à communiquer de l'air vers et en provenance du ressort pneumatique distant associé par le biais de ladite connexion.

11. Vanne de mise à niveau (311) destinée à être utilisée en association avec un absorbeur de chocs et un ressort pneumatique, ladite vanne de mise à niveau (311) comprenant :
un boîtier de vanne pour recevoir un élément rotatif, et un élément d'actionnement flexible (316) pour faire tourner ledit élément rotatif, ledit boîtier de vanne devant être connecté à l'un parmi un logement de tige de piston et un logement de vérin dans un absorbeur de chocs, et ledit élément d'actionnement flexible (316) devant être connecté à l'autre parmi le logement de tige de piston et le logement de vérin, ladite vanne de mise à niveau (311) communiquant de manière sélective avec deux orifices espacés pour fournir de l'air comprimé à un ressort pneumatique associé ou pour évacuer de l'air comprimé de ce dernier lorsque ledit élément rotatif tourne, **caractérisée en ce que** ledit élément d'actionnement flexible (316) est externe à la fois audit logement de tige de piston et audit logement de vérin.

12. Vanne de mise à niveau (311) selon la revendication 11, dans laquelle ledit élément rotatif comporte deux rainures en des positions radiales distinctes de telle sorte qu'une rainure soit située radialement à l'extérieur par rapport à l'autre rainure, lesdites deux rainures étant utilisées pour communiquer de manière sélective de l'air comprimé au ressort pneumatique associé ou pour évacuer de l'air comprimé de ce dernier.

13. Procédé de fonctionnement d'un absorbeur de chocs et d'un ressort pneumatique comprenant les étapes de :
a) fourniture d'un absorbeur de chocs ayant un piston monté pour se déplacer avec un premier logement (306), et un deuxième logement (304) pour définir un vérin pour recevoir ledit piston, fourniture d'une vanne de mise à niveau (311) fixée de manière à se déplacer avec l'un desdits premier et deuxième logements (22, 24), et un élément d'actionnement flexible (316), connecté à l'autre desdits premier et deuxième logements (306, 304) pour actionner de manière sélective ladite vanne de mise à niveau (311), ladite vanne de mise à niveau (311) permettant de fournir de manière sélective de l'air comprimé à un ressort pneumatique associé ou d'évacuer de l'air comprimé de ce dernier ; et
b) montage dudit absorbeur de chocs et dudit ressort pneumatique associé sur un véhicule (10), et autorisation desdits premier et deuxième logements (306, 304) à se déplacer l'un par rapport à l'autre en réponse à des forces agissant sur le véhicule (10), le déplacement desdits premier et deuxième logements (306, 304) l'un par rapport à l'autre actionnant ladite vanne de mise à niveau (311), et communication d'air audit ressort pneumatique associé si de l'air supplémentaire est requis au niveau dudit ressort pneumatique associé, et évacuation d'air dudit ressort pneumatique associé si moins d'air est requis au niveau du ressort pneumatique associé, **caractérisé en ce que** ledit élément d'actionnement flexible (316) est externe aux deux dits premier et deuxième logements (306, 304).

14. Procédé selon la revendication 13, comportant le montage dudit élément d'actionnement flexible (316) à l'intérieur d'un soufflet de protection (308) qui a une extrémité attachée à l'un desdits premier et deuxième logements (306, 304) et une extrémité opposée montée sur un boîtier de vanne de mise à niveau (328) qui loge ladite vanne de mise à niveau (311) et qui est fixé de manière à se déplacer avec ledit autre desdits premier et deuxième logements (306, 304).

15. Procédé selon la revendication 13, comportant le montage dudit ressort pneumatique associé à distance dudit absorbeur de chocs.

16. Procédé selon la revendication 14, comportant l'attache de ladite une extrémité dudit soufflet de protection (308) audit premier logement (22) et le boulonnage dudit boîtier de vanne de mise à niveau (328) sur ledit deuxième logement (24).

17. Vanne de mise à niveau (311) selon la revendication 11, comportant un ensemble de boulon en U qui fixe ledit boîtier de vanne audit un parmi ledit logement de tige de piston et ledit logement de vérin (304).

18. Vanne de mise à niveau (311) selon la revendication 11, comportant un soufflet de protection (308) qui reçoit ledit élément d'actionnement flexible (316), ledit soufflet de protection (308) ayant une extrémité attachée à l'un parmi ledit logement de tige de piston et ledit logement de vérin (304) et une extrémité opposée montée sur ledit boîtier de vanne.

19. Procédé d'assemblage d'un ensemble d'absorbeur de chocs, comportant les étapes de :
fourniture d'un premier logement (306) ayant un piston et une tige de piston (302) pouvant être déplacés avec ledit premier logement (306), et un deuxième logement (304) pouvant être déplacé par rapport audit premier logement (306) et audit piston, ledit piston étant reçu à l'intérieur dudit deuxième logement (304), ledit deuxième logement (304) définissant un vérin hydraulique pour recevoir ledit piston ;
fourniture d'une vanne de mise à niveau (311) comportant un élément d'actionnement flexible (316) ; **caractérisé en ce que** ledit élément d'actionnement flexible (316) est externe aux deux dits premier et deuxième logements (306, 304), puis
connexion de la vanne de mise à niveau (311) à l'un desdits premier et deuxième logements (306, 304) pour se déplacer avec ledit un desdits premier et deuxième logements (306, 304) ; et
connexion de l'élément d'actionnement flexible (316) à l'autre desdits premier et deuxième logements (306, 304) de telle sorte que ledit élément d'actionnement flexible (316) actionne ladite vanne de mise à niveau (311) pour fournir de l'air comprimé à un ressort pneumatique associé ou évacuer de l'air comprimé de ce dernier.

20. Procédé selon la revendication 19, dans lequel la vanne de mise à niveau (311) est boulonnée sur ledit un desdits premier et deuxième logements (306, 304) et ledit élément d'actionnement flexible (316) est attaché à l'autre desdits premier et deuxième logements (306, 304).
